# EUROPÄISCHE PATENTSCHRIFT

(11) **EP 2 493 317 B1**
(45) Veröffentlichungstag und Bekanntmachung des Hinweises auf die Patenterteilung: **31.12.2014**
(21) Anmeldenummer: 10768733.7
(22) Anmeldetag: 13.10.2010
(51) Int. Cl.: A01N 63/00

(54) **BEHANDLUNG VON PFLANZEN UND SAATGUT GEGEN EINEN/BEI EINEM BEFALL MIT BAKTERIELLEN ERREGERN**
TREATMENT OF PLANTS AND SEED FOR COMBATING AN ATTACK OF BACTERIAL PATHOGENS
TRAITEMENT DE PLANTES ET DE SEMENCES CONTRE UNE ATTAQUE/EN CAS D'ATTAQUE PAR DES AGENTS BACTÉRIENS

(30) Priorität: 28.10.2009 DE 102009051850
(43) Veröffentlichungstag der Anmeldung: 05.09.2012
(73) Patentinhaber: Sourcon-Padena GmbH & Co. KG, 72072 Tübingen (DE)
(72) Erfinder: VOGT, Wolfgang, 72072 Tuebingen (DE)
(74) Vertreter: Witte, Weller & Partner Patentanwälte mbB
(86) Internationale Anmeldenummer: PCT/EP2010/065349
(87) Internationale Veröffentlichungsnummer: WO 2011/051105

(56) Entgegenhaltungen:
- WO-A2-01/40441
- "PRORADIX-SEED TREATMENT FOR POTATOES", INTERNET CITATION, September 2000 (2000-09), XP002168107, Gefunden im Internet: URL:http://www.sourcon-padena.de/home_e/ag rar/kartoffel.htm [gefunden am 2001-05-23]
- Sourcon Padena GmbH & Co. KG: "Nachgewiesene Qualitäts- und Ertragssteigerungen", , 2009, XP002668368, Gefunden im Internet: URL:http://www.sourcon-padena.de/wp-conten t/themes/sourcon_padena/pdf/Tests_Proradix WG.pdf [gefunden am 2012-01-23]
- M Zeilner ET AL: "Gezielte Bekämpfung von Kartoffelkrankheiten", Gezielte Bekämpfung von Kartoffelkrankheiten, 1. Januar 2004 (2004-01-01), XP55016633, Gefunden im Internet: URL:http://www.abitep.de/content/pdf/Bekae mpfung-kartoffel-krankheiten_BLAF_2004.pdf [gefunden am 2012-01-16]

## Beschreibung

Die vorliegende Erfindung betrifft die Behandlung von Pflanzen oder Saatgut gegen einen/bei einem Befall mit dem bakteriellen Erreger *Erwinia carotovora.*

Von Bakterien verursachte Pflanzenkrankheiten zeigen sich durch eine Reihe verschiedenartiger Symptome. Häufige Merkmale sind Fäule, Blattflecken, das Welken von Blättern und Stängeln, Krebsgeschwülste, Trockenfäule von Blättern und Zweigen und die Bildung von Gallen.

Eine der bekanntesten bakteriellen Pflanzenkrankheiten ist der durch *Erwinia amylovora* verursachte "Feuerbrand", der viele zu den Rosengewächsen gehörende Zier- und Obstgehölze befällt, wie Apfel- und Birnbäume. Er zählt zu den Pflanzenkrankheiten, deren Auftreten in Deutschland und anderen Ländern wegen seiner Infektionsgefährlichkeit und wirtschaftlichen Schäden den Pflanzenschutzämtern gemeldet werden muss. Bei Feuerbrand handelt es sich um die erste Pflanzenkrankheit, bei der ein Bakterium als Verursacher nachgewiesen wurde. Bei den befallenen Bäumen werden die Blüten, Blätter und Zweige schwarz und verdorren. Schließlich kann die Krankheit den ganzen Baum in Mitleidenschaft ziehen und ihn absterben lassen.

Weitere Beispiele für bakterielle Pflanzenkrankheiten sind die so genannte "Schwarzbeinigkeit" und die "Knollennassfäule", die Kartoffelpflanzen befallen. Der Erreger ist das Bakterium *Erwinia carotovora,* auch als *Pectobacterium carotovorum* bezeichnet. Durch Schwarzbeinigkeit treten Ertragsminderungen auf, wenn ein Bestand etwa 15 % Fehlstellen aufweist. Die Knollennassfäule ist eine der gefürchtetsten Lagerkrankheiten. Erhebliche Probleme können auch bei Frühkartoffeln auftreten, besonders wenn losschalige Ware bei hohen Temperaturen geerntet wird und starken Temperaturunterschieden während der gesamten Kette bis zum Verbraucher ausgesetzt ist. Dabei kommt es zur "Schwitzwasserbildung", was den Ausbruch der Krankheit begünstigt. Verluste bei Lagerware können gehäuft in Jahren mit einer sehr feuchten zweiten Vegetationshälfte auftreten. Kartoffeln auf schweren Böden sind stärker betroffen als solche auf leichten Standorten. Besonders hohe Verluste kommen bei Staunässe vor. Dabei ist festgestellt worden, dass Probleme bei einzelnen Sorten deutlich häufiger auftreten, z.B. bei "Nicola", "Satina" und "Adretta", als bei anderen Sorten, z.B. "Solara".

Bakterielle Pflanzenkrankheiten werden häufig mit Antibiotika behandelt. Bei einer in den neunziger Jahren des 20. Jahrhunderts in Obstplantagen des Bodenseegebiets auftretenden Feuerbrandepidemie wurde das Antibiotikum Plantomycin bzw. Streptomycinsulfat eingesetzt. Allerdings gelangte das Antibiotikum in sich auf Nektarsuche befindliche Bienen, wodurch der Bienenhonig mit dem Antibiotikum kontaminiert wurde, das so in die Nahrungskette gelangte. Plantomycin sowie andere Antibiotika dürfen deshalb nur noch in streng kontrollierten Einzelfällen eingesetzt werden.

Hinzu kommt, dass die bakteriellen Erreger zunehmend Resistenzen gegen Antibiotika entwickeln, was eine Behandlung mit dieser Substanzklasse wirkungslos macht.

Zum Schutz gegen einen bakteriellen Befall werden die Pflanzen bzw. das Saatgut, wie beispielsweise die Pflanzkartoffel, häufig mit Kupferlösungen behandelt. Allerdings hat sich ergeben, dass mit Kupferspritzungen der Primär- bzw. Stängelbefall gerade im ökologischen, aber auch im konventionellen Kartoffelanbau nur schlecht kontrollierbar ist. Außerdem führt der Einsatz von Kupfer zu starken Umweltbelastungen, so dass die Europäische Gemeinschaft Bestrebungen hat, den Kupfereinsatz zu minimieren.

Vor diesem Hintergrund liegt der Erfindung die Aufgabe zugrunde, eine Alternative zu den derzeit verwendeten Mitteln zur Behandlung von bakteriell verursachten Pflanzenkrankheiten durch den Erreger Erwinia carotovora bereitzustellen, mit dem vorzugsweise die Verwendung von Antibiotika und Kupfer vermieden oder zumindest reduziert werden kann.

Diese Aufgabe wird durch die Verwendung des Bakteriums *Pseu-domonas sp.* Proradix (DSMZ 13134) gelöst.

Bei dem Pseudomonas-Stamm Proradix, der am 3. November 1999 unter der Hinterlegungsnummer DSM 13134 bei der DSMZ, 38124 Braunschweig, Deutschland, nach dem Budapester Vertrag hinterlegt wurde, handelt es sich um eine neue Spezies innerhalb der RNA-Gruppe I der Pseudomonadaceae. Eine endgültige Zuordnung von Proradix ist bislang noch nicht erfolgt, da nur eine relativ geringe Sequenzähnlichkeit zu bislang beschriebenen Arten der Gattung *Pseudomonas* besteht.

Die Wirksamkeit des Pseudomonas-Stammes Proradix gegen einen Befall von Pflanzen oder Saatgut mit einem bakteriellen Erreger Erwinia carotovora war überraschend und so nicht zu erwarten.

Der hinterlegte Pseudomonas-Stamm wird ausführlich in der WO 01/40441 beschrieben, auf die hiermit Bezug genommen wird. Dort wird eine Wirkung von Proradix gegen die Schwarzfäule beim Salat und Braunfäule bei Kartoffelknollen beschrieben. Beide Pflanzenkrankheiten werden durch *Rhizoctonia solani* ausgelöst.

*Rhizoctonia solani* zählt zu den echten Pilzen, gehört also dem Reich der Pilze (Fungi) an. *Rhizoctonia* ist die asexuelle Form von *Thanatephorus cucumeris* und ist eine weltweit verbreitete Pilzart aus der Gruppe der Basidienpilze. Zu den Basidienpilzen gehören auch so bekannte Speisepilze wie der Steinpilz und der Champignon.

In der Literatur wird außerdem behauptet, dass der Pseudomonas-Stamm Proradix gegen einen Befall von Pflanzen bzw. Saatgut durch die Gattung *Fusarium sp.* verwendet werden kann. Bei *Fusarium* handelt es sich ebenfalls um ein zum Reich der echten Pilze gehörendes Lebewesen, das eine Vielzahl von Pflanzenkrankheiten auslösen kann, die als Fusariosen bezeichnet werden.

Basierend auf den in der WO 01/40441 beschriebenen Experimenten und dem übrigen Stand der Technik könnte ein Fachmann demnach ggf. annehmen, dass der Pseudomonas-Stamm Proradix zur Behandlung von Pflanzen oder Saatgut gegen einen Befall auch durch weitere Pilze eingesetzt werden könnte.

Völlig überraschend war jedoch die positive Wirkung von Proradix auf Pflanzen bzw. Saatgut bei einem Befall durch den bakteriellen Erreger, Erwinia carotovora.

Bakterien zählen zu den Prokaryoten, die gänzlich anders organisiert sind als die zu den Eukaryoten zählenden Pilze. Bei den prokaryotischen Zellen befindet sich die DNA nicht in einem Zellkern sondern frei im Cytoplasma. Die DNA enthält keine Histonproteine, wie sie bei höheren, eukaryotischen Organismen in den Chromosomen mit der DNA assoziiert sind. Prokaryoten besitzen im Vergleich zu den Eukaryoten kleinere Ribosomen. Ferner enthalten Prokaryoten im Gegensatz zu Eukaryoten keine membranbegrenzten Organellen wie Plastiden, Chloroblasten und Mitochondrien. Ebenso besitzen sie keine Golgi-Apparate, Vakuolen und kein endoplasmatisches Retikulum. Die Zellwände, die häufig Angriffspunkt für Pflanzenschutzmittel darstellen, sind bei Prokaryoten gänzlich anders und komplexer aufgebaut als bei Eukaryoten.

Vor diesem Hintergrund wäre anzunehmen gewesen, dass ein gegen Pilze wirksames Mittel bei einem Befall von Pflanzen oder Saatgut durch einen bakteriellen Erreger wirkungslos sei.

Die Erfindung wird mit der Bereitstellung des Pseudomonas-Stammes Proradix vollkommen gelöst.

Mit dem Pseudomonas-Stamm Proradix wird erstmals ein Wirkstoff bereitgestellt, der eine echte Alternative zu Antibiotika und Kupfer darstellt. So konnten die Erfinder in Experimenten an Kartoffelknollen eindrucksvoll demonstrieren, dass das Auftreten von Schwarzbeinigkeit in Pflanzen und Stängeln sowie von Knollenfäule bei mit dem Pseudomonas-Stamm Proradix als alleinigem Wirkstoff (Monotherapie) behandelten Pflanzen im Vergleich zu unbehandelten Pflanzen deutlich reduziert werden konnte. Mittels Proradix lässt sich folglich eine durch einen bakteriellen Erreger verursachte Pflanzenkrankheit wirksam behandeln bzw. dieser vorbeugen. Die von den Erfindern festgestellten positiven Wirkungen von Proradix sind mit jenen vergleichbar, die durch eine Kupferbehandlung erzielt werden können.

Wie die Erfinder feststellen konnten, kann der Pseudomonas-Stamm Proradix einen Befall von bereits infizierten Pflanzen deutlich vermindern und ist somit therapeutisch wirksam. Aber auch einen Befall von nicht infizierten Pflanzen bzw. Knollen durch bakterielle Erreger konnte Proradix deutlich reduzieren und so den Ernteertrag durch das Mitwachsen an der Wurzel schützen.

In der Tat ist im Stand der Technik bislang kein anderes Bakterium beschrieben, das bei einem bzw. gegen einen Befall von Pflanzen bzw. Saatgut durch einen bakteriellen Erreger vergleichbare positive Ergebnisse liefert.

Bei dem Erreger handelt es sich um ein Bakterium der Klasse Gammaproteobacteria.

Diese Maßnahme hat den Vorteil, dass zielgerichtet solche bakteriellen Erreger behandelt werden, die eine Vielzahl von wichtigen Krankheitserregern für Pflanzen umfassen. Wie die Erfinder demonstrieren konnten, zeigt der Pseudomonas-Stamm Proradix gerade bei dieser Klasse von Bakterien optimale Wirkung.

Bei dem Erreger handelt es sich um *Erwinia carotovora.*

Diese Maßnahme hat den Vorteil, dass zielgerichtet eine der wichtigsten phytopathogenen Arten innerhalb der Gammaproteobacteria bekämpft wird. Die Erfinder konnten nachweisen, dass Proradix Kartoffeln wirksam gegenüber Schwarzbeinigkeit bzw. der Knollenfäule, die beide durch *Erwinia carotovora* ausgelöst werden, schützt.

Vor diesem Hintergrund ist es bevorzugt, wenn es sich bei den Pflanzen und/oder dem Saatgut um solche/solches der Kartoffelpflanze (*Solanum tubero-sum*) handelt.

Diese Maßnahme hat den Vorteil, dass eine der wichtigsten Kulturpflanzen mit großer wirtschaftlicher Bedeutung, die sehr häufig von bakteriellen Erregern befallen wird, wirksam geschützt bzw. behandelt werden kann. Wie die Erfinder demonstrieren konnten, führt Proradix gerade hier zu besonders guten Ergebnissen.

Der Pseudomonas-Stamm Proradix kann im Rahmen einer Monotherapie als alleiniger Wirkstoff, aber auch in Kombination mit anderen Wirkstoffen, wie beispielsweise Antibiotika, eingesetzt werden. Dadurch können sich gegebenenfalls synergistische Effekte ergeben.

Der erfindungsgemäße Pseudomonas-Stamm Proradix kann in beliebiger Formulierung bereitgestellt werden, bspw. als Lösung oder aber als Pulver. Derartige Formulierungen sind dem Fachmann bekannt. Formulierungsbeispiele werden in der WO 01/40441 angegeben, auf die explizit Bezug genommen wird. Geeignet sind außerdem die Formulierungen, die von der Firma Sourcon-Padena GmbH & Co. KG, Tübingen, Deutschland, bereitgestellt werden.

Offenbart wird ferner ein Verfahren zur Herstellung eines Mittels zur Behandlung von Pflanzen und/oder Saatgut gegen einen/bei einem Befall mit einem bakteriellen Erreger, mit folgenden Schritten: (a) Bereitstellung des Bakteriums *Pseudomonas sp.* Proradix (DSMZ 13134) in einer pflanzentherapeutisch wirksamen Menge, (b) Formulierung des Bakteriums aus Schritt (a).

Die Erfindung betrifft außerdem ein Verfahren zur Behandlung von Pflanzen und/oder Saatgut gegen einen/bei einem Befall mit dem bakteriellen Erreger *Erwinia carotovora,* mit folgenden Schritten: (a) Bereitstellung von Pflanzen und/oder Saatgut, (b) Inkubation der Pflanzen/des Saatgutes mit einer das Bakterium *Pseu-domonas sp.* Proradix (DSMZ 13134) enthaltenden Lösung, wobei die Lösung vorzugsweise durch Beizen, Besprühen oder Tauchbehandlung der Pflanzen/des Saatgutes aufgebracht wird.

Die Merkmale, Vorteile und Eigenschaften der erfindungsgemäßen Verwendung gelten für die erfindungsgemäßen Verfahren gleichermaßen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand von Ausführungsbeispielen näher erläutert, aus denen sich weitere Eigenschaften, Merkmale und Vorteile ergeben. Die Ausführungsbeispiele dienen zu Illustrationszwecken und schränken die Reichweite der Erfindung keinesfalls ein.

### Beispiel 1: Wissenschaftliche Klassifizierung des Gammaproteobacteriums Erwinia carotovora

| | |
|---|---|
| Klassifikation: | Lebewesen |
| Domäne: | Procaryota (Bakterien) |
| Abteilung: | Proteobacteria |
| Klasse: | Gammaproteobacteria |
| Ordnung: | Enterobacteriales |
| Familie: | Enterobacteriaceae |
| Gattung: | *Erwinia* |
| Art/Spezies: | *Erwinia carotovora* (*Pectobacterium carotovorum*) |

*Erwinia carotovora* gehört also zu den Prokaryoten bzw. Bakterien, nicht aber zum Reich der echten Pilze (Fungi).

Der Basidiomycet *Rhizoctonia solani,* der im Stand der Technik als mit Proradix behandelbar beschrieben ist, wird hingegen wissenschaftlich wie folgt klassifiziert:

| | |
|---|---|
| Klassifikation: | Lebewesen |
| Domäne: | Eucaryota |
| Reich: | Echte Pilze (Fungi) |
| Stamm: | Basidiomycota |
| Klasse: | Basidiomycetes |
| Ordnung: | Polysporales |
| Familie: | Corticiaceae |
| Gattung: | *Rhizoctonia* |
| Art/Spezies: | *Rhizoctonia solani* |

*Rhizoctonia solani* gehört also zum Reich der echten Pilze und zur Klasse der Basidiomyceten, zu der auch Speisepilze wie der Champignon oder Steinpilz zählen.

Im Stand der Technik ist ferner eine Wirkung von Proradix gegen *Fusarium* beschrieben. *Fusarium* wird wie folgt wissenschaftlich klassifiziert:

| | |
|---|---|
| Klassifikation: | Lebewesen |
| Domäne: | Eucaryota |
| Reich: | Echte Pilze (Fungi) |
| Stamm: | Ascomycota |
| Klasse: | Sordariomycetes |
| Ordnung: | Hypocreales |
| Familie: | Nectriaceae |
| Gattung: | *Fusarium* |

Auch *Fusarium* zählt somit zu den echten Pilzen.

Die Erfinder konnten also völlig überraschend zeigen, dass ein bislang nur in Bezug auf echte Pilze beschriebener Wirkstoff auch gegen Nicht-Pilze und sogar "Nicht-Eukaryoten", nämlich gegen bakterielle Erreger, eingesetzt werden kann.

### Beispiel 2: Isolation von Proradix.

Die Isolation des Bakteriums *Pseudomonas sp.* Proradix ist ausführlich in der WO 01/40441, dortiges Beispiel 1, beschrieben. Hierauf wird explizit Bezug genommen und die dortige Offenbarung zur Offenbarung der vorliegenden Anmeldung gemacht.

### Beispiel 3: Behandlung von Kartoffeln mit Proradix gegen Schwarzbeinigkeit

Kartoffelknollen (*Solanum tuberosum*) der Sorte "Maxilla", die eine mittelgradige Anfälligkeit gegenüber einem Befall durch *Erwinia sp.* zeigen (Anfälligkeit 5), wurden mit einer Proradix-Lösung (Proradix^{®}WG, Sourcon-Padena GmbH & Co. KG, Tübingen, Deutschland) nach Angaben des Herstellers gebeizt. Die Konzentration der wässrigen Flüssigbeize betrug ca. 60 g Proradix-Bakterien bzw. 4 x 10¹² CFU pro 2.500 kg Kartoffelknollen.

Als Referenz wurden parallel hierzu gesunde Knollen der gleichen Sorte mit einer wässrigen Kupferlösung (Cuprozin^{®}, Spiess-Urania Chemicals GmbH, Hamburg, Deutschland) nach Angaben des Herstellers gebeizt. Die Konzentration betrug ca. 460,6 g Kupferhydroxid pro Liter, was ca. 300 g/l reinem Kupfer entspricht. Etwa 0,4 l dieser Lösung wurden pro Hektar bzw. pro ca. 2.500 kg Kartoffelknollen aufgebracht. Als Negativkontrolle dienten ungebeizte Kartoffelknollen, die ebenfalls mit *Erwinia carotovora* infiziert wurden.

Die so behandelten und infizierten Knollen wurden für drei Stunden für eine bessere Infektion in eine feuchte Kammer gelegt. Anschließend wurden die Knollen in Gemüsepresstopferde in ein Gewächshaus gepflanzt und unter feuchten Bedingungen kultiviert.

Ca. 2 Monate nach der Pflanzung wurden die durchschnittliche Anzahl der Knollen sowie das Ausmaß der Schwarzbeinigkeit durch die Bonierung der Anzahl der befallenen Pflanzen und der befallenen Stängel ermittelt. Das Ergebnis ist in der nachfolgenden Tabelle I zusammengefasst.

**Tabelle I**

| Behandlung | Anzahl Knollen pro Pflanze | Schwarzbeinigkeit (% Pflanzen) | Schwarzbein igkeit (% Stängel) |
|---|---|---|---|
| Unbehandelte Knollen | 6,9 | 75 | 55,5 |
| Mit Proradix behandelte Knollen | 8,0 | 65 | 42 |
| Mit Kupfer behandelte Knollen | 8,9 | 57,5 | 35,3 |

Diese Ergebnisse zeigen auf beeindruckende Art und Weise, dass eine Behandlung von Kartoffelknollen mit dem Bakterium *Pseudomonas sp.* Proradix zu einer deutlichen Abnahme der Schwarzbeinigkeit, induziert durch den bakteriellen Erreger *Erwinia carotovora,* führt, die vergleichbar ist zu jener, die mit einer Kupferbehandlung erzielt wird.

### Beispiel 4: Behandlung von Kartoffel mit Proradix gegen Knollenfäule

Jeweils 30 Kartoffelknollen der Sorten "Maxilla" und "Opal" wurden, wie oben unter Beispiel 3 angegeben, mit einer Proradix- bzw. einer Kupferlösung gebeizt. Die Sorte "Opal" hat im Gegensatz zu der Sorte "Maxilla" eine geringe Anfälligkeit gegenüber Knollenfäule (Anfälligkeit 3). 30 Knollen beider Sorten blieben als Negativkontrolle unbehandelt. Die Knollen wurden gewogen. Die Knollen wurden anschließend verletzt und mit *Erwinia carotovora* infiziert. Die so behandelten und infizierten Knollen wurden für eine bessere Infektion fünf Tage in einer feuchten Kammer inkubiert.

Anschließend wurde der Fäuleanteil ausgewaschen und gewogen. Der Anteil der durch *Erwinia carotovora* befallenen Knollenmasse wurde daraufhin in Prozent bestimmt. Das Ergebnis ist in der nachfolgenden Tabelle II zusammengefasst.

**Tabelle II**

| Behandlung | Durchführungsvarianten | | | Anteil mit *Erwinia carotovora* befallener Knollenmasse % | |
|---|---|---|---|---|---|
| | | | | Sorte | |
| | | | | Opal | Maxilla |
| unbehandelt | | verletzen | infizieren | 25,0 | 64,0 |
| Proradix | behandeln | verletzen | infizieren | 13,4 | 32,0 |
| Kupfer | behandeln | verletzen | infizieren | 8,6 | 19,0 |

Dieses Experiment belegt eindrucksvoll, dass Proradix auch in der Lage ist, bei verschiedenen Kartoffelsorten eine durch *Erwinia carotovora* induzierte Knollenfäule therapeutisch zu behandeln bzw. vor einer Knollenfäule zu schützen.

### Fazit:

Die Erfinder konnten überraschenderweise belegen, dass der Pseudomonas-Stamm Proradix, der bislang nur zur Behandlung von durch Pilze verursachten Pflanzenkrankheiten beschrieben wird, erfolgreich zur Behandlung von Pflanzen und/oder Saatgut eingesetzt werden kann, welche mit einem bakteriellen Erreger befallen sind. Dies konnte beispielhaft an *Erwinia carotovora* und der Kartoffel demonstriert werden. Der Pseudomonas-Stamm Proradix kann als Lösung bereitgestellt werden. Die Lösung kann direkt zur Behandlung der Pflanzen und/oder Saatgut in Form von Besprühen, Beizen oder durch Tauchbehandlung eingesetzt werden. Die Lösung kann außerdem vakuumgetrocknet werden, wobei das erhaltene Pulver vor der Anwendung in Wasser gelöst wird.

## Patentansprüche

1. Verwendung des Bakteriums *Pseudomonas sp.* Proradix (DSMZ 13134) zur Behandlung von Pflanzen und/oder Saatgut gegen einen/bei einem Befall mit dem bakteriellen Erreger, *Erwinia carotovora.*

2. Verwendung nach Anspruch 1, **dadurch gekennzeichnet, dass** es sich bei den Pflanzen und/oder dem Saatgut um solche/solches der Kartoffelpflanze (*Solanum tuberosum*) handelt.

3. Verwendung nach Anspruch 2, **dadurch gekennzeichnet, dass** die Behandlung der Pflanzen und/oder des Saatgutes gegen/bei Schwarzbeinigkeit erfolgt.

4. Verfahren zur Behandlung von Pflanzen und/oder Saatgut gegen einen/bei einem Befall mit dem bakteriellen Erreger *Erwinia carotovora,* mit folgenden Schritten:
a) Bereitstellung von Pflanzen und/oder Saatgut,
b) Inkubation der Pflanzen/des Saatgutes mit einer das Bakterium *Pseudomonas sp.* Proradix (DSMZ 13134) enthaltenden Lösung.

5. Verfahren nach Anspruch 4, **dadurch gekennzeichnet, dass** in Schritt (b) die Lösung durch Beizen, Besprühen oder Tauchbehandlung der Pflanzen/des Saatgutes aufgebracht wird.

## Claims

1. Use of the bacterium *Pseudomonas sp.* Proradix (DSMZ 13134) for the treatment of plants and/or seeds against an affection by the bacterial pathogen *Erwinia* ca*rotovora.*

2. Use of claim 1, **characterized in that** the plants and/or seeds are from the potato plant (*Solanum tuberosum*).

3. Use of claim 2, **characterized in that** the treatment of the plants and/or seeds is against blackleg.

4. Method for the treatment of plants and/or seeds against an affection by the bacterial pathogen *Erwinia carotovora,* comprising the following steps:
a) providing plants and/or seeds,
b) incubation of the plants/seeds with a solution containing the bacterium *Pseudomonas sp.* Proradix (DSMZ 13134).

5. Method of claim 4, **characterized in that** in step (b) the solution is administered by mordanting, spraying or immersion of the plants/seeds.

## Revendications

1. Utilisation de la bactérie *Pseudomonas sp.* Proradix (DSMZ 13134) pour le traitement de plantes et/ou de semences contre une attaque/en cas d'attaque par l'agent bactérien *Erwinia carotovora.*

2. Utilisation selon la revendication 1, **caractérisée en ce que** les plantes et/ou les semences sont des plantes/semences de pomme de terre (*Solarum tuberosum*).

3. Utilisation selon la revendication 2, **caractérisée en ce que** le traitement des plantes et/ou semences s'effectue contre/en cas de jambe noire.

4. Procédé de traitement de plantes et/ou de semences contre une attaque/en cas d'attaque par l'agent bactérien *Enwinia carotovora,* comportant les étapes suivantes :
a) mise à disposition de plantes et/ou semences,
b) incubation des plantes/des semences avec une solution contenant la bactérie *Pseudomonas sp.* Proradix (DSMZ 13134).

5. Procédé selon la revendication 4, **caractérisé en ce que**, à l'étape (b), la solution est appliquée par désinfection, pulvérisation ou immersion des plantes/semences.
